Europäisches Patentamt

European Patent Office

Office européen des brevets

(19)

(11) Numéro de publication: **0 237 368**
**B1**

## FASCICULE DE BREVET EUROPÉEN

(12)

(45) Date de publication du fascicule du brevet:
**02.11.88**

(51) Int. Cl.⁴: **B 60 H 1/00**

(21) Numéro de dépôt: **87400191.0**

(22) Date de dépôt: **28.01.87**

(54) **Dispositif de commande en déplacement d'un organe mobile, tel qu'un volet d'une installation de chauffage et de ventilation pour véhicule automobile.**

(30) Priorité: **04.02.86 FR 8601522**

(43) Date de publication de la demande:
**16.09.87 Bulletin 87/38**

(45) Mention de la délivrance du brevet:
**02.11.88 Bulletin 88/44**

(84) Etats contractants désignés:
**DE ES FR IT**

(56) Documents cité:
**EP-A-0 182 686**
**FR-A-2 553 858**
**US-A-2 490 509**
**US-A-3 254 674**
**US-A-3 731 729**

(73) Titulaire: **VALEO, 64, avenue de la Grande Armée,
F-75848 Paris Cédex 17 (FR)**

(72) Inventeur: **Bouvot, Jean- Francois, 2, rue des
Grands Prés Le Mesnil Sevin, F-78720 Dampierre
(FR)**

(74) Mandataire: **Netter, André, Cabinet NETTER 40,
rue Vignon, F-75009 Paris (FR)**

EP 0 237 368 B1

LIBER, STOCKHOLM 1988

## Description

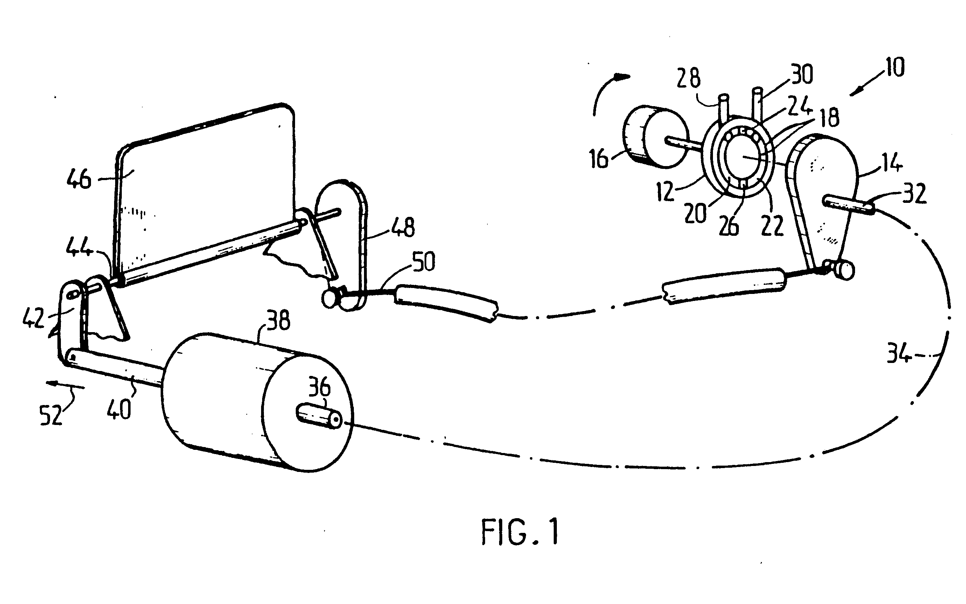

L'invention concerne un dispositif de commande en déplacement d'un organe mobile, tel qu'un volet dans une installation de chauffage et de ventilation ou de climatisation pour véhicule automobile, du type comprenant un moyen de commande à curseur ou à bouton rotatif, un distributeur de fluide actionné par le moyen de commande et relié d'une part à une source de fluide sous pression et à un échappement et d'autre part à un vérin simple effet pour l'alimenter en fluide sous pression, le mettre à l'échappement ou l'isoler de la source de fluide et de l'échappement, ainsi que des moyens de transmission de mouvement entre la tige de piston du vérin et l'organe mobile, et entre l'organe mobile et le distributeur (voir figure 1 de la présente demande).

On préfère actuellement, dans le domaine automobile, utiliser ces dispositifs de commande à pression de fluide à la place des commandes classiques à leviers et à câbles en raison des nombreux avantages qu'ils procurent: l'effort exercé par l'usager sur le moyen de commande placé au tableau de bord du véhicule est faible et constant, la source de fluide sous pression est disponible sur le système moteur du véhicule et, en cas de défaillance de cette source de fluide, l'organe mobile est automatiquement ramené dans une position prédéterminée de sécurité par les moyens de rappel associés au piston du vérin de manoeuvre de cet organe mobile.

On connaît déjà des distributeurs de fluide adaptés à cet usage, qui comprennent deux éléments mobiles l'un par rapport à l'autre en rotation ou en translation et qui déterminent entre eux des chambres de fluide séparées de façon étanche les unes des autres et qui sont susceptibles de relier le vérin à la source de fluide sous pression, à l'échappement, ou à en isoler le vérin en fonction de la position relative des deux éléments mobiles du distributeur. Pour cela, l'un des deux éléments est entraîné en déplacement par le moyen de commande prévu au tableau de bord, tandis que l'autre élément suit, de façon égale ou proportionnelle, la course de l'organe mobile. L'un de ces éléments est relié par un conduit souple à l'orifice d'alimentation du vérin, tandis que l'autre élément est relié par un conduit souple à la source de fluide sous pression. Les déplacements de ces éléments entraînent donc des déplacements correspondants de ces tuyaux souples, ce qui peut se révéler gênant dans le compartiment moteur d'un véhicule automobile et ce qui conduit à limiter les déplacements des éléments mobiles du distributeur, pour éviter l'emmêlement et l'arrachement des tuyaux souples.

L'invention a notamment pour but d'éviter ces inconvénients.

Par rapport au dispositif de commande du type précité, comprenant un distributeur de fluide qui est relié à un vérin et à une source de fluide sous pression par des tuyaux qui sont fixes et ne peuvent donc venir au contact d'autres éléments placés dans le compartiment moteur d'un véhicule automobile et qui ne peuvent s'emmêler et s'arracher.

L'invention propose à cet effet un dispositif de commande en déplacement d'un organe mobile, tel qu'un volet dans une installation de chauffage et de ventilation ou de climatisation pour véhicule automobile, comprenant un moyen de commande à curseur ou à bouton rotatif, un distributeur de fluide actionné par le moyen de commande et relié d'une part à une source de fluide sous pression et à un échappement et, d'autre part, à un vérin simple effet pour l'alimenter en fluide sous pression, le mettre à l'échappement ou l'isoler de la source de fluide et de l'échappement, des moyens de transmission de mouvement entre la tige de piston du vérin et l'organe mobile, et entre l'organe mobile et le distributeur, celui-ci comprenant au moins un premier élément mobile déplacé par le moyen de commande et un deuxième élément mobile déplacé par l'organe mobile ou par la tige de piston du vérin, le dispositif selon l'invention est caractérisé en ce que le distributeur comprend un troisième élément fixe, coopérant avec les deux autres éléments du distributeur et portant les moyens de liaison fluidiques avec la source de fluide, l'échappement et le vérin.

La disposition de ce troisième élément fixe dans le distributeur permet de résoudre, de façon simple, fiable et peu coûteuse, les problèmes de liaison du distributeur à une source de fluide sous pression et à un vérin de manoeuvre d'un organe mobile.

Selon une autre caractéristique de l'invention, le distributeur est du type rotatif, et le moyen de commande et le premier élément du distributeur sont mobiles en rotation sur plus de 360°.

Avantageusement, la rotation du moyen de commande et du premier élément du distributeur n'est pas limitée.

On évite ainsi les inconvénients liés à l'utilisation des commandes classiques, dans lesquelles la rotation d'un bouton de commande est limitée par des butées de fin de course, de sorte que, quand le bouton est dans une position extrême en butée, il faut le déplacer en sens inverse sur toute sa course pour l'amener dans son autre position extrême. L'invention permet précisément de ne pas imposer de position extrême à un bouton rotatif, et de ne pas limiter sa rotation.

Selon une forme de réalisation de l'invention, les éléments du distributeur sont des disques coaxiaux empilés déterminant entre leurs faces en regard des chambres annulaires concentriques qui sont séparées de façon étanche les unes des autres par des nervures en caoutchouc portées par l'une desdites faces et qui sont propres à être reliées par des passages de fluide traversant le disque formant le premier élément du distributeur, une des chambres formées entre les deux éléments mobiles du distributeur étant en permanence reliée au vérin par une chambre formée avec le troisième élément fixe du distributeur, quelles que soient les positions des deux éléments mobiles du distributeur.

Cette disposition permet de reporter, sur l'élément fixe du distributeur, le tuyau de liaison du distributeur au vérin, qui était auparavant porté par l'un des éléments mobiles.

Selon une autre caractéristique de l'invention, le disque formant le premier élément du distributeur est placé entre les disques formant le deuxième et le troisième élément du distributeur, et trois chambres annulaires concentriques sont formées entre le premier et le deuxième élément du distributeur, en alignement axial avec trois autres chambres annulaires concentriques correspondantes qui sont formées entre le premier et le troisième élément du distributeur et qui comprennent une première chambre s'étendant sur 360°, reliée au vérin par un passage de fluide fixe du troisième élément, une deuxième chambre et une troisième chambre s'étendant sur moins de 360° et reliées en permanence à la source de fluide et à l'échappement respectivement par des passages de fluide du troisième élément, les chambres formées entre le premier et le deuxième élément comprenant une première chambre s'étendant sur 360° et communiquant en permanence avec la première chambre formée entre les premier et troisième éléments par un passage de fluide du premier élément, et une deuxième et une troisième chambre d'étendues angulaires différentes et dont chacune communique par un passage de fluide du premier élément avec la deuxième ou la troisième chambre formée entre le premier et le troisième élément, en fonction de la position angulaire du premier élément.

De plus, le deuxième élément comporte, sur sa face tournée vers le premier élément, une rainure radiale formant passage de fluide, dont une extrémité débouche dans la première chambre formée entre ces deux éléments et dont l'autre extrémité débouche dans la deuxième ou la troisième chambre formée entre ces deux éléments, en fonction des positions angulaires respectives du premier et du deuxième élément.

Ainsi, le vérin peut être alimenté en fluide sous pression, mis à l'échappement, ou isolé de la source de fluide sous pression et de l'échappement, par un passage de fluide qui comprend la première chambre formée entre le premier et le troisième élément et la première chambre formée entre le premier et le deuxième élément, la rainure radiale formée dans le deuxième élément, la deuxième ou la troisième chambre formée entre le premier et le deuxième élément, et la deuxième ou la troisième chambre formée entre le premier et le troisième élément, ou des chambres d'isolement qui sont formées entre les deuxième et troisième chambres précitées.

Selon une autre caractéristique de l'invention, permettant la commande en déplacement de n organes mobiles, le dispositif comprend n distributeurs à trois éléments du type précité, constitués par des disques coaxiaux empilés et traversés axialement par un arbre de commande commun dont est solidaire en rotation d'une part le moyen de commande et d'autre part le premier élément de chaque distributeur, les deux autres éléments de chaque distributeur étant traversés librement par ledit arbre, et le troisième élément de chaque distributeur étant fixe et relié au vérin de déplacement de l'organe mobile associé, à la source de fluide et à l'échappement.

Ce distributeur permet, par l'entraînement en rotation d'un moyen de commande unique, de commander en déplacement n organes mobiles différents, selon des courses différentes et non simultanées.

Avantageusement, les distributeurs utilisés ont les mêmes premiers et deuxièmes éléments et diffèrent les uns des autres par leur troisième élément, ces troisièmes éléments comprennent des supports identiques sur lesquels sont fixées des garnitures différentes.

Un tel distributeur est particulièrement compact et peut être adapté à n'importe quel type d'installation de chauffage et de ventilation ou de climatisation d'un véhicule automobile, uniquement par modification du nombre d'étages de trois éléments en fonction du nombre d'organes mobiles à commander dans l'installation, et par utilisation, dans chaque étage, d'un élément fixe dont les caractéristiques correspondent aux caractéristiques de déplacement de l'organe mobile associé.

Dans la description qui suit, faite à titre d'exemple, on se réfère aux dessins annexés, dans lesquels:

- la figure 1 représente schématiquement un dispositif de commande en déplacement d'un organe mobile, connu dans la technique antérieure;
- la figure 2 est une vue schématique en coupe axiale d'un distributeur de fluide faisant partie d'un dispositif de commande selon l'invention;
- la figure 3 est une vue de face de l'élément fixe de ce distributeur;
- la figure 4 est une vue de face de l'élément mobile de ce distributeur, qui est associé au moyen de commande;
- la figure 5 représente schématiquement la superposition des divers éléments du distributeur, pour illustrer leur fonctionnement;
- la figure 6 est une vue schématique en coupe axiale d'un autre distributeur selon l'invention, permettant la commande en déplacement de trois organes mobiles différents;
- la figure 7 est une vue de face d'un élément mobile de ce distributeur;
- la figure 8 est une vue de face d'un autre élément mobile de ce distributeur;
- la figure 9 est un graphe représentant schématiquement, en fonction de la rotation du bouton de commande, les déplacements des trois organes mobiles commandés par le distributeur de la figure 6.

On se réfère d'abord à la figure 1, qui représente un dispositif connu de la technique antérieure.

Ce dispositif comprend un distributeur de fluide 10, représenté ici en perspective éclatée et qui est constitué de deux disques coaxiaux 12 et 14 appliqués et maintenus l'un contre l'autre. Ce distributeur est monté derrière la façade du tableau de bord d'un véhicule automcbile, le disque 12 étant solidaire en rotation d'un bouton de commande 16 qui est entraîné en rotation par un usager.

La face de l'élément 12, qui est tournée vers l'élément 14, porte une garniture en caoutchouc ou matière élastiquement déformable analogue, formée avec deux nervures circulaires concentriques 18 délimitant entre elles deux chambres annulaires 20 et 22 s'étendant chacune sur un peu moins de 180° et séparées l'une de l'autre par deux chambres d'isolement 24 et 26 formées par deux nervures radiales s'étendant au voisinage l'une de l'autre entre les deux nervures circulaires 18. L'élément 12 comprend encore un embout 28 formant un passage de fluide, dont une extrémité est destinée à être reliée à une source de fluide sous pression par un conduit souple non représenté et dont l'autre extrémité débouche, sur la face de l'élément 12 tournée vers l'élément 14, dans la chambre 20, et un autre embout 30 formant passage d'échappement dont une extrémité débouche à l'air libre et dont l'autre extrémité débouche dans la chambre 22.

La source de fluide sous pression est en général une source d'air en dépression, c'est-à-dire à une pression inférieure à la pression atmosphérique, constituée par exemple par le collecteur d'alimentation d'un moteur à combustion interne.

L'élément 14 comprend également un embout 32, dont l'extrémité libre est reliée par un tuyau souple 34 à l'orifice d'alimentation 36 d'un vérin simple effet 38, et dont l'autre extrémité débouche sur la face de l'élément 14 tournée vers l'élément 12, entre les nervures circulaires concentriques 18 lorsque les deux éléments sont appliqués et maintenus l'un sur l'autre.

A son extrémité opposée à celle comprenant l'embout d'alimentation 36, le vérin 38 comprend une tige de piston 40 qui est reliée par une biellette 42 à l'arbre de rotation 44 d'un organe mobile 46 tel qu'un volet d'une installation de chauffage et de ventilation ou de climatisation de véhicule automobile. L'arbre 44 du volet est également solidaire en rotation d'une biellette 48 reliée par un câble 50 de transmission de mouvement à l'élément 14 du distributeur.

Le fonctionnement de ce dispositif est le suivant:

Dans la position représentée, les positions angulaires relatives des éléments 12 et 14 du distributeur sont telles que l'embout 32 de l'élément 14 débouche dans la chambre d'isolement 26. Le vérin 38 est donc isolé de la source de fluide sous pression et de l'échappement, la tige de piston 4C et le volet 46 sont immobiles. Lorsque, par rotation du bouton de commande 16 dans le sens des aiguilles d'une montre en figure 1, l'usager fait tourner l'élément 12 du distributeur, l'embout 32 de l'élément 14 débouche alors dans la chambre 22 qui est reliée par l'embout 30 à l'échappement. Le vérin 38 est mis à l'échappement, sa tige de piston se déplace dans le sens indiqué par la flèche 52 et fait tourner le vclet 46. Cette rotation du volet 46 est transmise par le câble 50 à l'élément 14, qui est donc entraîné en rotation dans le même sens que l'élément 12, jusqu'à ce que l'embout 32 débouche à nouveau dans la chambre d'isolement 26. Le vérin 38 étant alors isolé de la source de fluide et de l'echappement, le mouvement de la tige de piston 40 et du volet 46 s'arrête.

Inversement, si l'usager tourne le bouton 16 dans le sens contraire, l'embout 32 de l'élément 34 va déboucher dans la chambre 20, de sorte que le vérin 38 sera alimenté en fluide sous pression. Il en résulte un déplacement de la tige de piston 40 dans le sens opposé à celui de la flèche 52, une rotation du volet 46 dans le sens contraire des aiguilles d'une montre en figure 1, et donc une rotation correspondante de l'élément 14 jusqu'à ce que l'embout 32 débouche à nouveau dans la chambre d'isolement 26.

Ce dispositif permet donc de modifier à volonté la position angulaire du volet 46 entre deux positions limites prédéterminées, par rotation du bouton de commande 16 dans un sens ou dans l'autre, le déplacement en rotation du volet 46 étant directement proportionnel à celui du bouton de commande 16.

Toutefois, la rotation du bouton de commande 16 est nécessairement limitée, car il ne servirait à rien que le déplacement en rotation du bouton 16 puisse être supérieur à celui du volet 46 dont les positions extrêmes sont en général déterminées par des butées fixes; de plus, si la rotation du bouton 16 n'était pas limitée, elle entraînerait rapidement un arrachement du tuyau souple reliant l'embout 28 de l'élément 12 à la source de fluide sous pression.

Comme indiqué plus haut, l'invention a pour objet un dispositif de ce type dans lequel les tuyaux de liaison du distributeur à la source de fluide sous pression et au vérin sont portés par un élément fixe du distributeur, ce qui permet, entre autres, d'éviter que ces tuyaux se déplacent lorsque le bouton de commande du distributeur est entraîné en rotation et, également, de pouvoir entraîner en rotation sur plusieurs tours le bouton de commande et l'élément mobile du distributeur qui lui est associé, ce qui facilite, comme on le verra ci-après, la commande de certaines installations de chauffage et de ventilation ou de climatisation pour véhicule automobile.

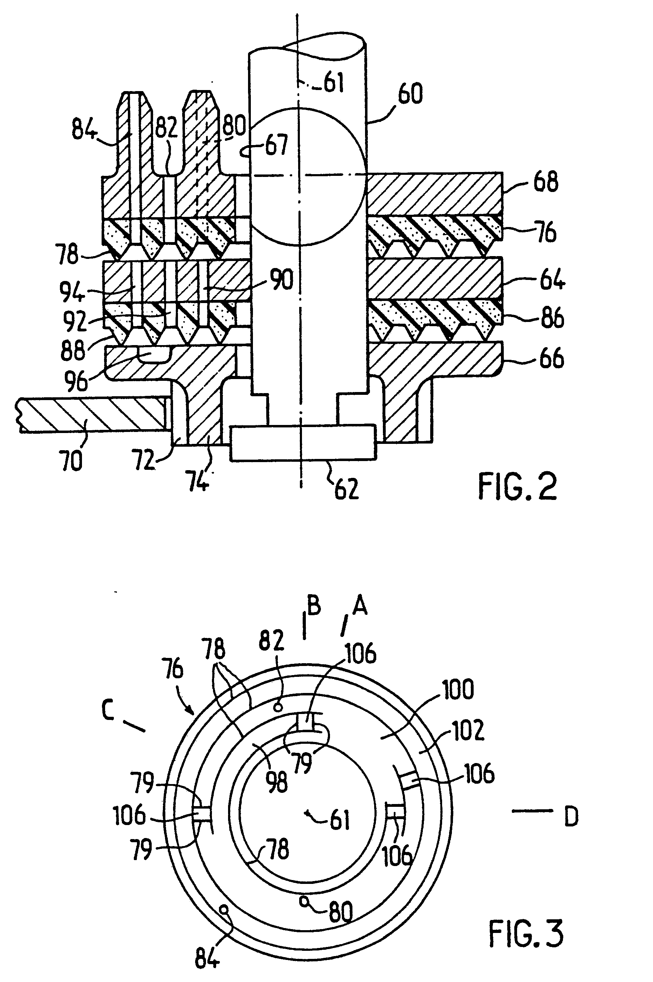

On se réfère maintenant à la figure 2, représentant schématiquement en coupe axiale un distributeur selon l'invention.

Ce distributeur est destiné à remplacer le distributeur 10 de la figure 1, les autres éléments du dispositif de commande pouvant rester les mêmes.

Le distributeur de la figure 2 comprend un arbre rotatif 60 dont l'extrémité supérieure est solidaire en rotation d'un bouton de commande (non représenté) semblable au bouton de commande 16 de la figure 1, et dont l'extrémité inférieure comporte une butée 62 contre laquelle est appliqué le distributeur, par exemple par l'intermédiaire d'un roulement ou analogue.

Le distributeur selon l'invention comprend trois éléments constitués par des disques coaxiaux empilés et traversés axialement par l'arbre 60 et comprenant un premier disque 64 solidaire en rotation de l'arbre 60, par exemple au moyen d'un méplat 67 formé sur cet arbre, et un deuxième disque 66 et un troisième disque 68 qui sont placés de part et d'autre du premier disque 64 et qui sont traversés librement par l'arbre 60.

Le deuxième disque 66 est relié à l'organe mobile à déplacer par des moyens de transmission de mouvement, qui peuvent être du type à câble comme représenté en figure 1, ou bien qui peuvent comprendre un pignon 70 comme représenté en figure 2, venant en prise avec une denture 72 formée sur une jupe cylindrique 74 du deuxième disque 66.

Le troisième disque 68 est fixe en rotation et comprend sur sa face tournée vers le premier disque 64, une garniture 76 d'élastomère ou de matière analogue élastiquement déformable, présentant des nervures concentriques 78 dont les sommets sont appliqués à étanchéité sur la face supérieure du premier disque 64 pour délimiter entre elles et le disque 64 trois chambres annulaires centrées sur l'axe commun 61 de l'arbre 60 et des disques. Le disque 68 et la garniture 76 sont traversés par trois conduits 80, 82, 84 formant passage de fluide, le conduit 80 étant destiné à être relié à la source de fluide sous pression, le conduit 82 formant passage d'échappement à l'air libre, le conduit 84 étant destiné à être relié à l'orifice d'alimentation du vérin 38.

De même, le disque 64 solidaire en rotation de l'arbre 60 comprend, sur sa face tournée vers le disque 66, une garniture 86 de matière élastiquement déformable formée avec des nervures 88 dont les sommets sont appliqués à étanchéité sur la face supérieure du disque 66 pour former entre elles et avec ce disque trois chambres annulaires centrées sur l'axe 61, qui sont chacune axialement alignées avec une chambre formée entre la garniture 76 et le disque 64. Le disque 64 et la garniture 86 sont traversés par trois conduits 90, 92 et 94 parallèles à l'axe 61, formant passages de fluide, qui relient chacun une chambre formée entre la garniture 76 et le disque 64 à une chambre formée entre la garniture 86 et le disque 66.

Le disque 66 comprend, sur sa face supérieure, une rainure radiale 96 qui établit une communication entre la chambre intermédiaire et la chambre radialement la plus externe formées entre la garniture 86 et le disque 66.

Dans la position représentée en figure 2, on voit que le conduit 84 qui est relié à l'orifice d'alimentation du vérin communique avec le conduit d'échappement 82 par la chambre radialement la plus externe formée entre la garniture 76 et le disque 64, par le conduit 94, la chambre radialement la plus externe formée entre la garniture 86 et le disque 66, la rainure radiale 96, la chambre intermédiaire formée entre la garniture 86 et le disque 66, le conduit 92, et la chambre intermédiaire formée entre la garniture 76 et le disque 64.

On se réfère maintenant à la figure 3 qui est une vue de face de la garniture 76 fixée sur la face inférieure du disque 68 fixe en rotation.

Les chambres annulaires délimitées entre les nervures 78 comprennent une première chambre 98, radialement la plus interne, dans laquelle débouche le conduit 80 relié à la source de fluide sous pression, une deuxième chambre 100 intermédiaire, reliée directement à l'échappement par une interruption de deux nervures circulaires internes 78, et une troisième chambre 102, radialement la plus externe, dans laquelle débouche le conduit 84 relié à l'orifice d'alimentation du vérin. Cette chambre annulaire 102 est continue sur 360°. La chambre intermédiaire 100 s'étend sur 180° au total, en ayant la forme représentée en figure 3 où l'on voit que la chambre intermédiaire 100 et la chambre 98 radialement la plus interne sont mutuellement imbriquées l'une dans l'autre, en raison d'une interruption sur 65° environ de la deuxième nervure circulaire 78, comptée à partir de l'axe 61. Les chambres 98 et 100 sont séparées l'une de l'autre par des chambres d'isolement 106, délimitées entre deux nervures circulaires 78 consécutives et deux nervures radiales 79 qui sont écartées l'une de l'autre d'une distance légèrement supérieure au diamètre d'un conduit 90 ou 92 formé à travers le premier disque 64 et sa garniture 86.

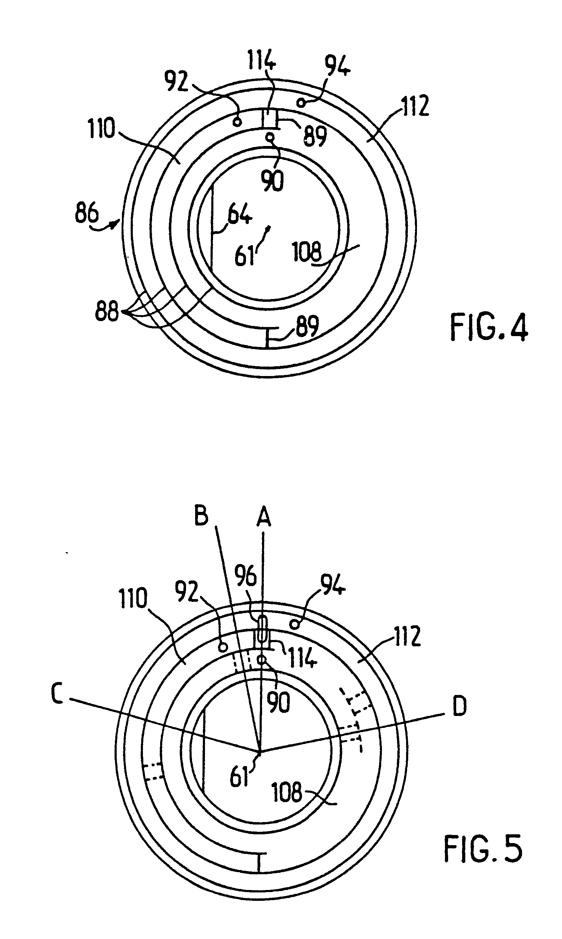

On se réfère maintenant à la figure 4, qui est une vue de face de la garniture 86 fixée sur la face inférieure du disque 64 solidaire en rotation de l'arbre 60.

Les chambres annulaires délimitées entre les nervures 88 de la garniture 86 comprennent une première chambre 108, radialement la plus interne, dans laquelle débouche le conduit 90, une chambre intermédiaire 110 dans laquelle débouche le conduit 92 et une chambre 112 radialement la plus externe dans laquelle débouche le conduit 94.

La chambre externe 112 est continue et s'étend sur 360°, tandis que la chambre intermédiaire 110 s'étend sur 180° uniquement, la chambre interne 108 étant continue sur 360° et comprenant de plus une partie semi-circulaire dans le prolongement de la chambre intermédiaire 110, en raison d'une interruption sur 180° de la deuxième nervure circulaire 88, comptée à partir de l'axe 61. La chambre interne 108 et la chambre intermédiaire 110 sont séparées l'une de l'autre par au moins une chambre d'isolement 114, définie entre deux nervures circulaires 88 et deux nervures radiales 89, écartées l'une de l'autre d'une distance légèrement supérieure à la largeur de la rainure radiale 96 du disque 66.

On va maintenant décrire le fonctionnement de ce distributeur, en référence à la figure 5, dans laquelle on a superposé les contours des chambres formées entre les trois éléments du distributeur.

Dans la position de départ représentée en figure 5, ou position A, le disque 64 solidaire du bouton de commande est dans une position angulaire par rapport au disque fixe 68 telle que son conduit 90 se trouve immédiatement en arrière, par rapport au sens contraire des aiguilles d'une montre, d'une chambre d'isolement 106 séparant la chambre d'échappement 100 de la chambre 98 reliée à la source de fluide sous pression qui sont formées entre le disque 64 et le disque 68, de sorte que la chambre 108 et la chambre 110 formées entre le disque 64 et le disque 66 sont toutes les deux reliées à l'échappement. Dans cette position de départ, le volet 46 manoeuvré par le vérin 38 est dans sa position de pleine ouverture correspondant à la mise à l'échappement du vérin 38, et la rainure radiale 96 du disque 66 est radialement alignée avec la chambre d'isolement 114 formée entre le disque de commande 64 et le disque 66 relié au volet 46 par le système de transmission de mouvement comprenant le pignon 70. Les chambres 112 et 102 d'alimentation du vérin sont donc isolées de la source de fluide sous pression et de l'échappement, de telle sorte que le volet 46 est maintenu dans sa position de pleine ouverture. Si, dans ces conditions, le volet 46 bouge sans que l'usager commande le distributeur, le disque 66 va suivre le mouvement du volet et sa rainure radiale va se déplacer par rapport au volet 64 en sortant de la chambre d'isolement 114. Comme les chambres 108 et 110 séparées par ces chambres d'isolement sont toutes les deux reliées à l'échappement, le vérin 38 sera mis à l'échappement, quel que soit le sens de déplacement du volet, et ramènera le volet dans sa position de pleine ouverture.

Si, à patir de la position A, on fait tourner le bouton de commande dans le sens contraire des aiguilles d'une montre en figure 5, le disque 64 va tourner dans ce sens par rapport au disque fixe 68 jusqu'à la position B où son conduit 90 débouche dans une chambre d'isolement 106 formée entre les chambres 98 et 100, de telle sorte que la chambre 108 va être isolée de la source de pression de fluide et de l'échappement, tandis que la chambre 110 reste reliée à l'échappement. Au cours de ce mouvement, la rainure radiale 96 du disque suiveur 66 se trouve alors légèrement en arrière, par rapport au sens contraire des aiguilles d'une montre, de la chambre d'isolement 114, et fait communiquer la chambre 112 avec la chambre 108. Le vérin 38 est donc isolé de la source de pression de fluide et de l'échappement et ne produit aucune action sur le volet 46.

Si ensuite, a partir de la position B, on fait à nouveau tourner le disque de commande 64 dans le sens contraire des aiguilles d'une montre en figure 5, son conduit 90 va déboucher dans la chambre 98 formée entre le disque de commande 64 et le disque 68. Cette chambre est reliée à la source de pression de fluide, de sorte que la chambre 108 va être également reliée à la source de fluide sous pression et va alimenter en fluide sous pression la chambre 112 par l'intermédiaire de la rainure radiale 96 du disque suiveur 66. Le vérin est alors alimenté en fluide sous pression, c'est-à-dire en air à une pression inférieure à la pression atmosphérique dans l'exemple considéré, et va déplacer le volet 46 vers sa position de fermeture. Le mouvement de fermeture du volet 46 se traduit par une rotation du disque suiveur 66 dans le sens contraire des aiguilles d'une montre en figure 5, jusqu'à ce que la rainure radiale du disque 66 revienne dans la chambre d'isolement 114 formée entre ce disque et le disque de commande 64. Le mouvement du volet s'arrête alors, car le vérin 38 est dans cette position isolé de la source de fluide sous pression et de l'échappement.

On a donc, à partir de la position B, un déplacement angulaire du volet 46 qui est proportionnel au déplacement angulaire du disque de commande 64, et donc au déplacement angulaire du bouton de commande actionné par l'usager.

Cette proportionnalité des déplacements du volet et du bouton de commande est conservée jusqu'à la position C, qui correspond à la fermeture complète du volet 46. Cette position est définie par une butée que le volet ne peut franchir, de telle sorte que le disque suiveur 66 va être immobilisé en rotation en même temps que le volet 46, la rainure radiale 96 du disque suiveur 66 restant sur l'axe radial C de la figure 5 lorsque la rotation du bouton de commande se poursuit dans le sens contraire des aiguilles d'une montre.

Dans la position C, le conduit 90 du disque de commande 64 débouche toujours dans la chambre 98 reliée à la source de pression de fluide, tandis que son conduit 92 débouche encore dans la chambre 100 reliée à l'échappement, mais se trouve au voisinage de l'extrémité de cette chambre, qui est séparée par une chambre d'isolement 106 de la chambre 98 reliée à la source de fluide sous pression.

Lorsque la rotation du bouton de commande est poursuivie dans le sens contraire des aiguilles d'une montre à partir de la position C, le conduit 92 du disque de commande 64 va tout d'abord déboucher dans la chambre d'isolement 106, puis va déboucher dans la chambre 98, comme l'autre conduit 90 du disque de commande. Ainsi, lorsque la position C est dépassée, le vérin 38 reste alimenté en dépression et le volet 46 est maintenu dans sa position de fermeture totale.

Cet état est conservé jusqu'à la position D, pour laquelle les conduits 90 et 92 du disque de commande débouchent tous les deux dans une chambre d'isolement 106 séparant les chambres 98 et 100 formées entre le disque de commande 64 et le disque fixe 68. Dans cette position, le vérin 38 est isolé de la source de fluide sous pression et de l'échappement, et le volet 46 reste dans sa position de fermeture totale.

Si la rotation du bouton de commande se poursuit dans le même sens au-delà de la position D, les deux conduits 90 et 92 du disque de commande 64 vont déboucher dans la chambre 100 reliée à l'échappement. La rainure radiale 96 du disque suiveur 66, qui était restée dans la position radiale C, va alors mettre en communication la chambre 112 d'alimentation du vérin avec la chambre 110 reliée à l'échappement. Le vérin 38 est donc mis à l'échappement et fait tourner le volet 46 de sa position de fermeture totale à sa position de pleine ouverture. A la fin de ce mouvement, la rainure radiale du disque suiveur 66 est ramenée dans la position de départ A, dans laquelle elle relie toujours les chambres 110 et 112 lorsque le disque de commande 64 se trouve dans une position intermédiaire entre les positions D et A. Le vérin 38 reste donc relié à l'échappement et le volet 46 est maintenu dans sa position de pleine ouverture. Il en est ainsi jusqu'à ce que le disque de commande 64 soit ramené dans la position B, par rotation dans le sens contraire des aiguilles d'une montre en figure 5.

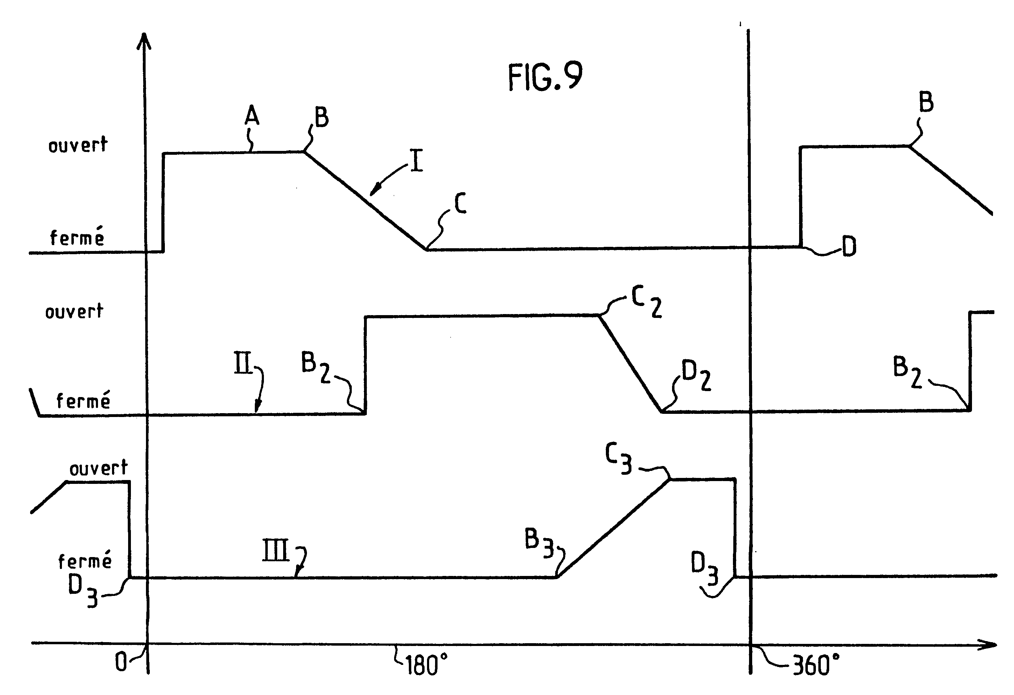

Le déplacement angulaire du volet 46, qui peut être par exemple un volet de commande de dégivrage, est représenté par la courbe supérieure 1 de la figure 9, en fonction de la position angulaire du bouton de commande du distributeur.

On peut vérifier sur la courbe I que, pour la position B du bouton de commande ou du disque de commande 64, le volet est ouvert, qu'il se ferme progressivement de la position B à la position C du bouton de commande, et qu'il reste fermé de la position C à la position D du bouton de commande, qu'il s'ouvre complètement dès que le bouton de commande dépasse la position D et reste complètement ouvert jusqu'à la position B du bouton de commande.

Le distributeur selon l'invention permet donc de ne pas limiter la rotation du bouton de commande, que l'usager peut faire tourner toujours dans le même sens s'il le désire, sans qu'il en résulte un risque quelconque d'arrachement ou d'emmêlement des tuyaux de liaison du distributeur à la source de fluide sous pression et au vérin d'actionnement d'un volet.

L'invention permet également de réaliser un distributeur compact permettant de commander plusieurs volets au moyen d'un bouton de commande unique, avec des déplacements de volets qui ne sont ni identiques, ni simultanés lorsque cela est nécessaire.

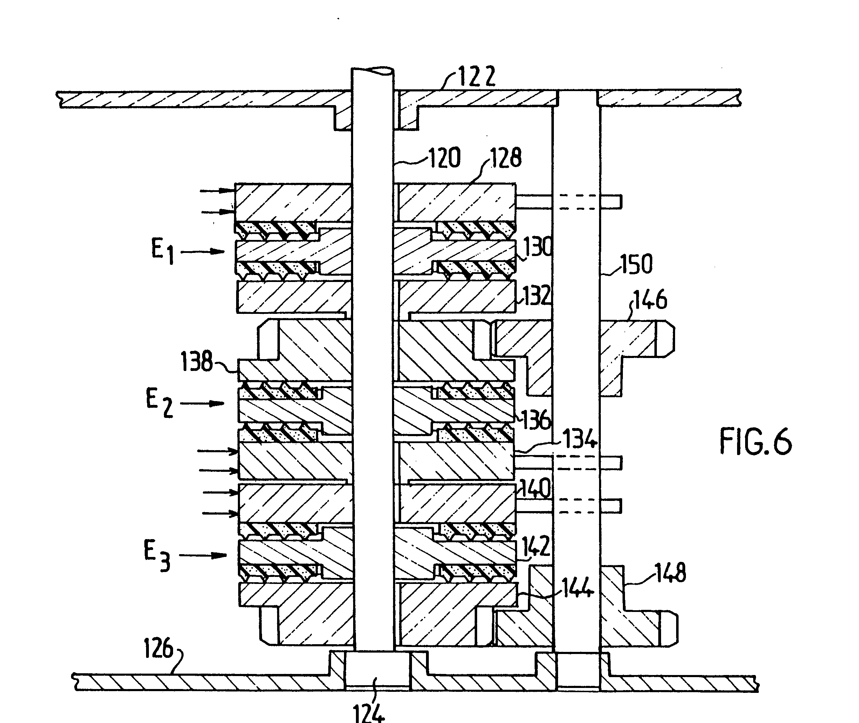

On se réfère maintenant à la figure 6, qui est une vue schematique en coupe axiale d'un distributeur selon l'invention permettant la commande de trois volets, par exemple d'un volet de commande de dégivrage, d'un volet de commande d'aération latérale et d'un volet d'aération inférieure dans l'habitacle d'un véhicule automobile.

Le distributeur de la figure 6 comprend un arbre rotatif 120, dont une extrémité traverse la façade 122 d'un tableau de bord et est solidaire en rotation d'un bouton de commande (non représenté). A son extrémité opposée, l'arbre 120 est supporté et guidé en rotation par un palier 124 porté par une paroi interne 126 du tableau de bord.

Le distributeur comprend trois étages superposés le long de l'axe de l'arbre 120, qui sont chacun constitués par un distributeur du type représenté en figure 2. Le premier étage E1 comprend donc un disque fixe 128, un disque de commande 130 solidaire en rotation de l'arbre 120, et un disque suiveur 132. La face inférieure du disque fixe 128 comprend une garniture de matière élastiquement déformable à nervures coopérant avec la face supérieure du disque de commande 130, la face inférieure de ce disque de commande comprenant également une garniture élastiquement déformable à nervures coopérant avec la face supérieure du disque suiveur 132, comme dans le cas du distributeur de la figure 2.

Le deuxième étage E2 comprend un disque 134 fixe en rotation, un disque de commande 136 solidaire en rotation de l'arbre 120, et un disque suiveur 138. Cet étage E2 a la même structure générale que l'étage E1, mais est monté à l'envers, le disque suiveur 138 étant adjacent au disque suiveur 132 de l'étage E1.

L'étage E3 comprend également un disque 140 fixe en rotation, un disque de commande 142 solidaire en rotation de l'arbre 120 et un disque suiveur 144, et est monté dans le même sens que l'étage E1.

Les disques fixes 128, 134 et 140 comprennent chacun deux conduits formant passages de fluide, destinés à être reliés à la source de fluide sous pression et à l'orifice d'alimentation d'un vérin, et qui débouchent radialement sur la périphérie du disque, comme schématisé par les flèches en figure 6. Chaque disque fixe 128, 134 et 140 peut comprendre une fourchette radiale qui engage l'arbre 150 et maintient le disque fixe en rotation par rapport à l'arbre 120.

Chaque disque suiveur 132, 138, 144 est relié par des moyens de transmission de mouvement au volet de commande de dégivrage, au volet de commande d'aération inférieure ou au volet de commande d'aération latérale respectivement, les moyens de transmission de mouvement étant constitués par un système à câbles et à leviers ou par des systemes à câbles, à leviers et à pignons, comme dans le cas de la figure 2.

Dans le cas de la figure 6, on voit que le disque suiveur 138 est en prise avec un pignon 146 et que le disque suiveur 144 est en prise avec un pignon 148, ces deux pignons étant montés libres à rotation sur un même arbre 150 parallèle à l'axe 120 et supporté à ses extrémités par la façade 122 et la paroi interne 126 du tableau de bord. Le pignon suiveur 132 du premier étage E1 peut être relié au volet associé également par un pignon, ou par tout autre moyen approprié.

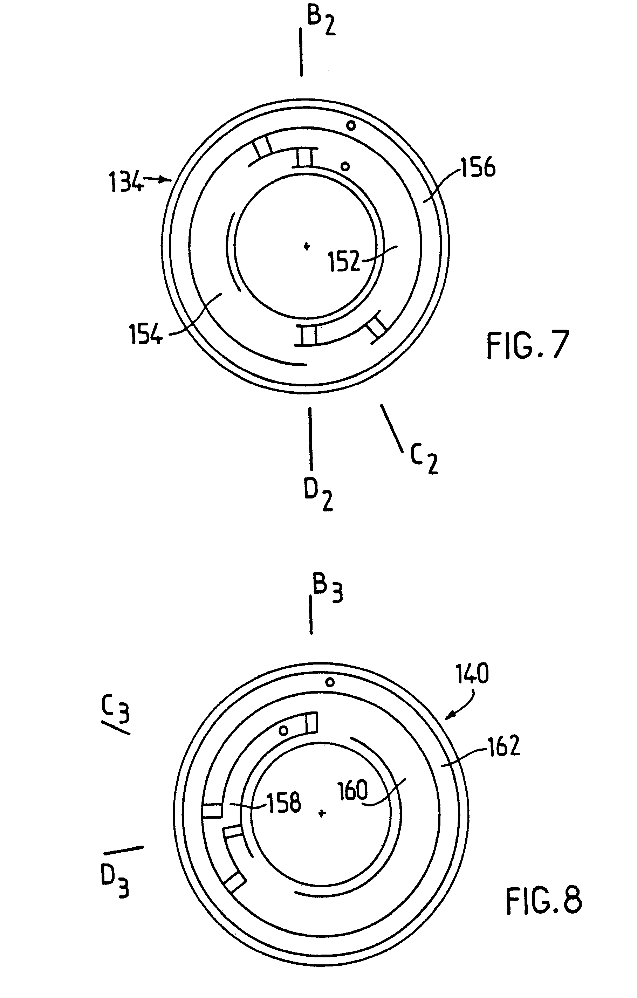

Dans le distributeur de la figure 6, les disques de commande 130, 136 et 142 sont identiques les uns aux autres, et les disques suiveurs 132, 138 et 144 sont également identiques. Les trois étages du distributeur diffèrent les uns des autres par les garnitures des disques fixes 128, 134 et 140, l'un de ces disques pouvant être celui représenté en figure 3, tandis que les deux autres, 134 et 140, sont représentés de face dans les figures 7 et 8 respectivement.

Les nervures de la garniture du disque 134 représenté en figure 7 délimitent une première chambre 152 de forme sensiblement semi-circulaire reliée à la source de fluide sous pression, une chambre 154, sensiblement semi-circulaire, reliée à l'échappement, et une chambre annulaire continue 156 reliée à l'orifice d'alimentation du vérin d'actionnement du volet de commande d'aération inférieure.

Dans l'étage E2 du distributeur, le disque 134 coopère avec un disque de commande tel que celui représenté en figure 4, qui coopère lui-même avec un disque suiveur tel que celui de la figure 2. Le fonctionnement de l'étage E2 du distributeur est donc le suivant, en supposant que le volet associé à ce distributeur est fermé lorsque son vérin d'actionnement est mis à l'échappement.

La position angulaire du disque de commande par rapport au disque fixe 134 peut être définie par les positions angulaires B2, C2 et D2 en figure 7. En supposant que le disque de commande se déplace dans le sens des aiguilles d'une montre par rapport au disque fixe 134 en figure 7, on voit que le vérin est alimenté en fluide sous pression lorsqu'on quitte la position B2, ce qui provoque l'ouverture complète du volet correspondant qui reste en position de pleine ouverture jusqu'à la position C2. De la position C2 à la position D2, le volet se ferme progressivement, son déplacement angulaire étant proportionnel à celui du disque de commande. De la position D2 à la position B2, le vérin reste relié à l'échappement, et le volet est maintenu dans sa position de fermeture totale.

Dans le cas du disque fixe 140 de l'étage E3, représenté en vue de face en figure 8, les nervures de la garniture portées par ce disque définissent une première chambre 158 reliée à la source de fluide sous pression, une deuxième chambre 160 reliée à l'échappement, et une troisième chambre 162, annulaire et continue sur 360°, reliée à l'orifice d'alimentation du vérin d'actionnement du volet associé.

Comme pour les étages E1 et E2, le disque fixe 140 de l'étage E3 est associé à un disque de commande tel que celui de la figure 4 et à un disque suiveur tel que celui de la figure 2.

Le fonctionnement de cet étage est le suivant, en supposant que le volet associé est fermé lorsque son vérin d'actionnement est relié à l'échappement.

La position radiale du disque de commande par rapport au disque fixe 140 éant définie par les positions radiales B3, C3, D3 de sa chambre d'isolement 114, on voit que le volet passe progressivement de sa position de fermeture à sa position d'ouverture lorsque le disque de commande passe de la position B3 à la position C3, le déplacement angulaire du volet étant alors proportionnel à celui du disque de commande, que le volet reste ouvert quand le disque de commande passe de la position C3 à la position D3, et se ferme complètement dès que le disque de commande dépasse la position D3, le volet restant fermé complètement lorsque le disque de commande passe, dans le sens contraire des aiguilles d'une montre, de la position D3 à la position B3.

Les déplacements des volets commandés par les étages E2 et E3 du distributeur sont représentés par les courbes II et III respectivement de la figure 9, en fonction des positions angulaires des disques de commande associés.

On voit, sur le graphe de la figure 9, que le distributeur de la figure 6 permet, au moyen d'un bouton de commande unique, déplaçable en rotation, d'avoir tout d'abord un dégivrage maximum, l'aération latérale et l'aération inférieure étant fermées, puis une réduction progressive du dégivrage avec une aération inférieure maximale et une aération latérale nulle, puis un dégivrage sensiblement nul en même temps qu'une aération inférieure maximale et une aération latérale augmentant progressivement, et finalement un dégivrage nul, une aération inférieure nulle et une aération latérale maximale, avant de retrouver un dégivrage maximum, une aération inférieure et une aération latérale nulles.

L'usager peut faire tourner le bouton de commande dans le sens qu'il le souhaite, sans jamais venir en butée et devoir revenir en arrière pour obtenir le type d'aération souhaitée.

En outre, les moyens de transmission de mouvement qui relient, d'une part, les tiges de piston aux volets à déplacer et, d'autre part, les volets aux éléments suiveurs du distributeur, permettent, pour un déplacement angulaire donné du bouton de commande et une course prédéterminée de la tige du vérin d'actionnement, d'obtenir le déplacement angulaire voulu d'un volet entre ses positions limites, l'adaptation entre ces déplacements étant réalisée par un choix approprié des longueurs de leviers et/ou des rapports de transmission des couples de pignons faisant partie des moyens de transmission de mouvement entre vérins, volets et éléments suiveurs du distributeur.

## Revendications

1. Dispositif de commande en déplacement d'un organe mobile, tel qu'un volet (46) dans une installation de chauffage et de ventilation ou de climatisation pour véhicule automobile, comprenant un moyen de commande (16, 60) à curseur ou à bouton rotatif, un distributeur de fluide (10) actionné par le moyen de commande et relié, d'une part, à une source de fluide sous pression et à un échappement, et, d'autre part, à un vérin simple effet (38) pour l'alimenter en fluide sous pression, le mettre à l'échappement ou l'isoler de la source de fluide et de l'échappement, des moyens de transmission de mouvement (50, 70) entre la tige de piston (40) du vérin, l'organe mobile (46) et le distributeur, celui-ci comprenant au moins un premier élément mobile (64) déplacé par le moyen de commande (60) et un deuxième élément mobile (66) déplacé par l'organe mobile (46) ou par la tige de piston (40) du vérin, caractérisé en ce que le distributeur (10) comprend un troisième élément (68) fixe, coopérant avec les deux autres éléments (64, 66) du distributeur et portant les moyens (80, 82, 84) de liaison fluidique avec la source de fluide, l'échappement et le vérin (38).

2. Dispositif selon la revendication 1, caractérisé en ce que le distributeur est du type rotatif, et en ce que le moyen de commande (60) et le premier élément mobile (64) du distributeur sont mobiles en rotation sur plus de 360°.

3. Dispositif selon la revendication 2, caractérisé en ce que la rotation du moyen de commande (60) est du premier élément mobile (64) du distributeur n'est pas limitée.

4. Dispositif selon la revendication 2 ou 3, caractérisé en ce que le déplacement angulaire du deuxième élément (66) du distributeur est égal ou proportionnel à la course de l'organe mobile (46).

5. Dispositif selon l'une des revendications précédentes, caractérisé en ce que les éléments du distributeur sont des disques coaxiaux empilés, qui déterminent entre leurs faces en regard des chambres annulaires concentriques qui sont séparées de façon étanche les unes des autres par des nervures (78, 88) en caoutchouc ou analogue portées par l'une desdites faces et qui sont propres à être reliées par des passages de fluide (90, 92 et 94) traversant le premier élément mobile (64) du distributeur, l'une (112) des chambres formées entre les deux éléments mobiles (64, 66) du distributeur étant en permanence reliée au vérin (38) par une chambre (102) formée entre le premier élément (64) et le troisième élément (68) du distributeur, quelles que soient les positions des deux éléments mobiles (64, 66) du distributeur.

6. Dispositif selon la revendication 5, caractérisé en ce que le disque (64) formant le premier élément du distributeur est placé entre les disques (66, 68) formant le deuxième et le troisième élément du distributeur, et en ce que trois chambres annulaires concentriques (108, 110, 112) sont formées entre les premier et deuxième éléments (64, 66) du distributeur, en alignement axial avec trois autres chambres annulaires concentriques correspondantes (98, 100, 102) qui sont formées entre les premier et troisième éléments (64, 66) du distributeur et qui comprennent une première chambre (102) s'étendant sur 360° entre les premier et troisième éléments (64, 68) et reliée au vérin par un passage de fluide fixe (84) du troisième élément (68), et une deuxième et une troisième chambre (98, 100) s'étendant sur moins de 360° et reliées en permanence à la source de fluide et à l'échappement respectivement par des passages de fluide (80, 82) du troisième élément (68), les chambres formées entre les premier et deuxième éléments (69, 66) comprenant une première chambre (112) s'étendant sur 360° et communiquant en permanence avec la première chambre (102) formée entre les premier et troisième éléments (64, 68) par un passage de fluide (94) du premier élément (64), et une deuxième et une troisième chambre (108, 110) d'étendues angulaires différentes et dont chacune communique par un passage de fluide (90 ou 92) du premier élément (64) avec la deuxième chambre (98) ou la troisième chambre (100) formée entre les premier et troisième éléments (64, 68) en fonction de la position angulaire du premier élément (64) du distributeur.

7. Dispositif selon la revendication 6, caractérisé en ce que le deuxième élément (66) du distributeur comporte, sur sa face tournée vers le premier élément (64), une rainure radiale (96) formant passage de fluide, dont une extrémité débouche dans la première chambre (112) formée entre ces deux éléments et dont l'autre extrémité débouche dans la deuxième chambre (108) ou la troisième chambre (110) formée entre ces deux éléments, en fonction des positions angulaires respectives du premier et du deuxième élément (64, 66) du distributeur.

8. Dispositif selon la revendication 6 ou 7, caractérisé en ce que des chambres d'isolement (106, 114) sont formées entre les deuxième et troisième chambres (98, 100; 108, 110) précitées.

9. Dispositif selon l'une des revendications précédentes, permettant la commande en déplacement de n organes mobiles, caractérisé en ce qu'il comprend n distributeurs à trois éléments du type précité, constitués par des disques coaxiaux (128, 130, 132, 134, 136, 138, 140, 142, 144), qui sont empilés et traversés axialement par un arbre de commande (120) dont est solidaire en rotation, d'une part, le moyen de commande et, d'autre part, le premier élément (130, 136, 142) de chaque distributeur, les deux autres éléments de chaque distributeur étant traversés librement par ledit arbre (120), le troisième élément (128, 134, 140) de chaque distributeur étant fixe en rotation et relié au vérin de déplacement de l'organe mobile associé, à la source de fluide sous pression et à l'échappement.

10. Dispositif selon la revendication 9, caractérisé en ce que ces distributeurs ont les mêmes premiers et deuxièmes éléments, et ne diffèrent que par leurs troisièmes éléments fixes.

**Patentansprüche**

1. Betätigungseinrichtung eines beweglichen Organs, wie eine Klappe (46) in einer Anlage zur Beheizung und Belüftung oder Klimatisierung eines Kraftfahrzeugs, enthaltend ein Betätigungsmittel (16, 60) mit Schieber oder Drehknopf, einen Fluidverteiler, der durch das Betätigungsmittel betätigt wird und einerseits mit einer Druckfluidquelle und einem Auslaß und andererseits mit einem einfach wirkenden Zylinder (38) verbunden ist, um diesem ein Fluid unter Druck zuzuführen, ihn mit dem Auslaß zu verbinden oder ihn von der Fluidquelle und dem Auslaß zu trennen, eine Bewegungsübertragungseinrichtung (50, 70) zwischen der Stange des Kolbens (40) des Zylinders, dem beweglichen Organ (46) und dem Verteiler, wobei dieser wenigstens ein erstes bewegliches Element (64) enthält, das von dem Betätigungsmittel (60) verstellt wird, und ein zweites bewegliches Element (66) enthält, das von dem beweglichen Organ (46) oder durch die Stange des Kolbens (40) des Zylinders verstellt wird, dadurch gekennzeichnet, daß der Verteiler (10) ein drittes, festes Element (68) enthält, das mit den zwei anderen Elementen (64, 66) des Verteilers zusammenwirkt und die Einrichtungen (80, 82, 84) zur fluidischen Verbindung mit der Fluidquelle, dem Auslaß und dem Zylinder (38) trägt.

2. Einrichtung nach Anspruch 1, dadurch gekennzeichnet, daß der Verteiler vom Drehtyp ist und daß das Betätigungsmittel (60) und das erste bewegliche Element (64) des Verteilers über mehr als 360° drehbeweglich sind.

3. Einrichtung nach Anspruch 2, dadurch gekennzeichnet, daß die Drehung des Betätigungsmittels (60) und des ersten beweglichen Elements (64) des Verteilers nicht begrenzt ist.

4. Einrichtung nach Anspruch 2 oder 3, dadurch gekennzeichnet, daß die Vinkelverstellung des zweiten Elements (66) des Verteilers gleich oder proportional dem Weg des beweglichen Organs (46) ist.

5. Einrichtung nach einem der vorhergehenden Ansprüche, dadurch gekennzeichnet, daß die Elemente des Verteilers gestapelte koaxiale Scheiben sind, die zwischen ihren einander zugewandten Seiten konzentrische ringförmige Kammern ausbilden, die voneinander in abgedichteter Weise durch Rippen (78, 88) aus Gummi oder einem analogen Material getrennt sind, die von einer der genannten Flächen getragen werden und die dazu eingerichtet sind, mit Fluidkanälen (90, 92 und 94) verbunden zu werden, die das erste bewegliche Element (64) des Verteilers durchqueren, wobei eine (112) der zwischen den zwei beweglichen Elementen (64, 66) des Verteilers ausgebildeten Kammern unabhängig von den Stellungen der zwei beweglichen Elemente (64, 66) des Verteilers ständig mit dem Zylinder (38) durch eine Kammer (102) verbunden ist, die zwischen dem ersten Element (64) und dem dritten Element (68) des Verteilers ausgebildet ist.

6. Einrichtung nach Anspruch 5, dadurch gekennzeichnet, daß die Scheibe (64), die das erste Element des Verteilers bildet, zwischen den Scheiben (66, 68) angeordnet ist, die das zweite und das dritte Element des Verteilers bilden, und daß drei konzentrische ringförmige Kammern (108, 110, 112) zwischen den ersten und zweiten Elementen (64, 66) des Verteilers axial ausgerichtet mit drei weiteren ringförmigen, konzentrischen entsprechenden Kammern (98, 100, 102) ausgebildet sind, die zwischen den ersten und dritten Elementen (64, 66) des Verteilers ausgebildet sind und die umfassen: eine erste Kammer (102), die sich über 360° zwischen den ersten und dritten Elementen (64, 68) erstreckt und mit dem Zylinder über einen festen Fluidkanal (84) des dritten Elements (68) verbunden ist, und eine zweite und eine dritte Kammer (98, 100), die sich über veniger als 360° erstrecken und ständig mit der Fluidquelle bzw. dem Auslaß über Fluidkanäle (80, 82) des dritten Elements (68) verbunden sind, wobei die zwischen den ersten und zweiten Elementen (69, 66) ausgebildeten Kammern umfassen: eine erste Kammer (112), die sich über 360° erstreckt und ständig über einen Fluidkanal (94) des ersten Elements (64) mit der ersten Kammer (102), die zwischen den ersten und dritten Elementen (64, 68) ausgebildet ist, verbunden ist, und eine zweite und eine dritte Kammer (108, 110) unterschiedlicher Winkelausdehnungen, von denen eine jede über einen Fluidkanal (90 oder 92) des ersten Elements (64) mit der zweiten Kammer (98) oder der dritten Kammer (100) in Verbindung steht, die zwischen den ersten und dritten Elementen (64, 68) ausgebildet sind, je nach Winkelposition des ersten Elements (64) des Verteilers.

7. Einrichtung nach Anspruch 6, dadurch gekennzeichnet, daß das zweite Element (66) des Verteilers auf seiner gegen das erste Element (64) gewandten Seite eine radiale Rille (96) aufweist, die einen Fluidkanal ausbildet, dessen eines Ende in die erste Kammer (112) mündet, die zwischen den zwei Elementen ausgebildet ist, und dessen anderes Ende in die zweite Kammer (108) oder in die dritte Kammer (110) mündet, die zwischen diesen zwei Elementen ausgebildet ist, je nach den entsprechenden Winkelpositionen des ersten und des zweiten Elements (64, 66) des Verteilers.

8. Einrichtung nach Anspruch 6 oder 7, dadurch gekennzeichnet, daß Trennkammern (106, 114) zwischen den vorgenannten zweiten und dritten Kammern (98, 100; 108, 110) ausgebildet sind.

9. Einrichtung nach einem der vorhergehenden Ansprüche, die die Betätigung der Verstellung von n beweglichen Organen erlaubt, dadurch gekennzeichnet, daß sie n Verteiler mit drei Elementen der vorgenannten Art enthält, die von koaxialen Scheiben (128, 130, 132, 134, 136, 138, 140, 142, 144) gebildet sind, die gestapelt sind und axial von einer Steuerwelle (120) durchdrungen sind, mit der einerseits eine Betätigungseinrichtung und andererseits das erste Element (130, 136, 142) eines jeden Verteilers drehfest verbunden sind, wobei die zwei anderen Elemente eines jeden Verteilers frei von der genannten Welle (120) durchdrungen sind, das dritte Element (128, 134, 140) eines jeden Verteilers gegen Drehung gesichert und mit dem Verstellzylinder des zugehörigen beweglichen Organs, mit der Druckfluidquelle und mit dem Auslaß verbunden ist.

10. Einrichtung nach Anspruch 9, <u>dadurch gekennzeichnet</u>, daß die Verteiler die gleichen ersten und zweiten Elemente aufweisen und sich nur durch ihre dritten, festen Elemente unterscheiden.

## Claims

1. A device for controlling displacement of a moving member such as a flap (46) in an installation for heating and ventilating or for air conditioning a motor vehicle, the device comprising slider or rotary knob control means (16, 60), a fluid distributor (10) actuated by the control means and connected firstly to a source of fluid under pressure and to an exhaust, and secondly to a single-acting actuator (38) in order to connect said actuator to the source of fluid under pressure, to the exhaust, or to isolate it both from the source of fluid under pressure and from the exhaust, motion transmission means (50, 70) for transmitting motion between the actuator piston rod (40), the moving member (46), and the distributor, said distributor including at least one moving first element (64) displaced by the control means (60), and a moving second element (66) displaced by the moving member (46) or by the actuator piston rod (40), characterized in that the distributor (10) includes a fixed third element (68) co-operating with the other two elements (64, 66) of the distributor and including means (80, 82, 84) for providing fluid connection with the source of fluid under pressure, with the exhaust, and with the actuator (38).

2. A device according to claim 1, characterized in that the distributor is of the rotary type, and in that the control means (60) and the moving first element (64) of the distributor are rotatable through more than 360°.

3. A device according to claim 2, characterized in that the rotation of the control means (60) and of the moving first element (64) of the distributor is not limited.

4. A device according to claim 2 or 3, characterized in that the angular displacement of the second element (66) of the distributor is equal or proportional to the stroke of the moving member (46).

5. A device according to any preceding claim, characterized in that the distributor elements are stacked coaxial disks, defining concentric angular chambers between their facing faces, said chambers being separated from one another in sealed manner by ribs (78, 88) made of rubber or like material mounted on one of said faces, and being suitable for being connected to fluid passages (90, 92 and 94) passing through the moving first element (64) of the distributor, one (112) of said chambers formed between the two moving elements (64, 66) of the distributor being permanently connected to the actuator (38) via a chamber (102) formed between the first and third elements (64 and 68) of the distributor, regardless of the positions of the two moving elements (64 and 66) of the distributor.

6. A device according to claim 5, characterized in that the disk (64) constituting the first element of the distributor is placed between the disks (66, 68) constituting the second and third elements of the distributor, and in that three concentric annular chambers (108, 110, 112) are formed between the first and second elements (64, 66) of the distributor, said chambers being axially aligned with three other corresponding concentric annular chambers (98, 100, 102) formed between the first and the third elements (64, 66) of the distributor and comprising a first chamber (102) extending over 360° between the first and third elements (64, 68) and connected to the actuator via a fixed fluid passage (84) through the third element (68), and a second chamber (98) and a third chamber (100) each extending over less than 360° and permanently connected respectively to the source of fluid under pressure and to the exhaust via fluid passages (80, 82) passing through the third element (68), the chambers formed between the first and second elements (64, 66) comprising a first chamber (112) extending over 360° and in permanent communication with the first chamber (102) formed between the first and third elements (64, 68) via a fluid passage (94) through the first element (64), and a second chamber and a third chamber (108, 110) extending over different angular extents and each communicating via a respective fluid passage (90 or 92) through the first element (64) with the second chamber (98) or the third chamber (100) formed between the first and third elements (64, 68) as a function of the angular position of the first element (64) of the distributor.

7. A device according to claim 6, characterized in that the second element (66) of the distributor has a fluid-passing radial groove (96) in its face facing the first element (64), one end of said groove opening out into the first chamber (112) formed between said two elements, and the other end of the groove opening out into the second or the third chamber (108 or 110) formed between said two elements as a function of the relative angular positions of the first and second elements (64, 66) of the distributor.

8. A device according to claim 6 or 7, characterized in that isolating chambers (106, 114) are formed between said second and third chambers (98, 100; 108, 110).

9. A device according to any preceding claim for controlling the displacement of a plurality n of moving members, said device being charácterized in that it comprises n three-element distributors as specified above, constituted by stacks of coaxial disks (128, 130, 132, 134, 136, 138, 140, 142, 144) having a control shaft (120) passing axially therethrough, with said control shaft being constrained to rotate firstly with the control means and secondly with the first element (130, 136, 142) of each three-element distributor, said shaft (120) passing freely through the other two elements of each distributor, with the third element (128, 134, 140) of each distributor being fixed so as not to rotate and being connected to the actuator for displacing the associated moving member, to the source of fluid under pressure, and to the exhaust.

10. A device according to claim 9, characterized in that said distributors have identical first and second elements, and differ solely in their fixed third elements.

FIG.1

FIG. 2

FIG. 3

FIG.4

FIG.5

FIG.6

0 237 368

FIG. 7

FIG. 8

FIG.9